# EUROPEAN PATENT SPECIFICATION

(11) **EP 0 505 729 B1**
(45) Date of publication and mention of the grant of the patent: **04.06.1997**
(21) Application number: 92102849.4
(22) Date of filing: 20.02.1992
(51) Int. Cl.: H04N 1/40, G06K 9/38

(54) **Image binarization system**
Bildbinarisierungssystem
Systéme de conversion binaire d'image

(30) Priority: 29.03.1991 JP 66918/91
(43) Date of publication of application: 30.09.1992
(73) Proprietor: EASTMAN KODAK COMPANY (a New Jersey corporation), Rochester, New York 14650 (US)
(72) Inventor: Yoshida, Naoko, c/o EASTMAN KODAK COMPANY, Rochester, New York 14650-2201 (US); Takizawa, Yoshinori, c/o EASTMAN KODAK COMPANY, Rochester, New York 14650-2201 (US)
(74) Representative: Wagner, Karl H., Dipl.-Ing.

(56) References cited:
- US-A- 4 193 093
- US-A- 4 220 972
- SYSTEMS & COMPUTERS IN JAPAN vol. 22, no. 3, 1991, NEW YORK US pages 66 - 73 SASAKAWA ET AL. 'A Method for Threshold Selection in Binary Images Using Mean Adjacent-Pixel Number'

## Description

### Field of the Invention

The present invention relates to an image binarization system, particularly to an image binarization system that scans a document, compares the scanned signals with a threshold value, and binarizes the signals accordingly.

### Description of the Prior Art

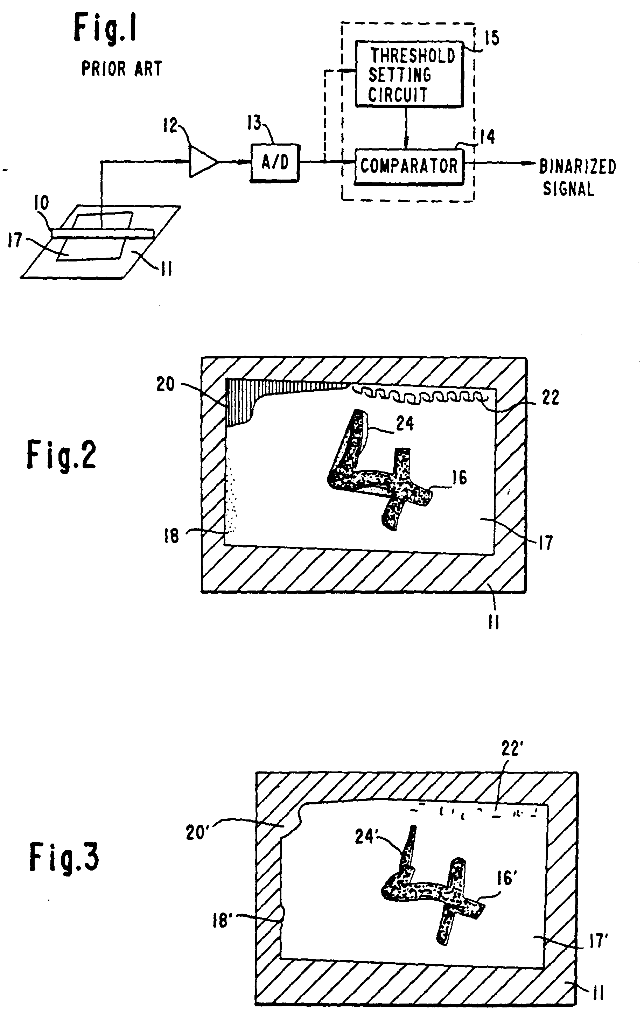

Optical character readers (OCRs) and optical mark readers (OMRs) are two types of systems which binarize and process image information at a specific location on a document at an arbitrary position within a two-dimensional image frame. While there are various methods of performing the binarization, the basic configuration of such systems is as shown in Figure 1. With reference to the drawing, the apparatus comprises an image acquisition means such as a scanner 10, an amplifier 12 for amplifying the scanned signals, an A/D converter 13 for binarizing the digitized signals, a comparator 14 for digitizing the binarized signals, and a threshold setting circuit 15 used for setting the threshold value against which the digitized signals are compared.

The scanner 10 is illustrated schematically in Figure 1 and the other figures and will be understood to run from left to right and/or right to left horizontally across the two-dimensional image frame 11 as the frame 11 and the document 17 are advanced vertically past the scanner as taught, for example, in commonly assigned U.S. Patents US-A-4,796,962 and US-A-4,921,320. The image frame 11 may comprise a black background platen or drum and the document 17 may, in practice be somewhat skewed in reference to the nominal horizontal and vertical axes of the scanner 10 and frame 11. Typically documents to be scanned have backgrounds lighter than or differently colored than the black background frame 11.

The threshold setting circuit 15 produces the threshold value used for converting multilevel image signals to binary black and white signals. This can be accomplished using various methods. The simplest one is the fixed threshold value method in which the digitized magnitude of the scanned image signal is compared with a predetermined reference value. A more advanced method involves utilizing a specific region of the image binarization target to calculate a suitable fixed threshold value.

A drawback with such systems is that when there are variations in document illumination intensity, non-uniformity in the density of document images or colored patterns in the background, the threshold value cannot adequately distinguish between the density level of the target image and the background density level.

One binarization method used to solve this problem involves using a floating threshold value that is calculated based on the average density levels of the pixels around the pixel of interest, thereby enabling the contours of blurred or low-contrast images to be reproduced more accurately. While effective for more accurately reproducing halftone image regions in the inner portion of a document, this method also reproduces any smudges, shading and the like around the edges of the document, making the edges look ragged instead of straight as in the original document. This poses a problem when a binarized image is to undergo further processing such as optical character recognition, for example, in which it is necessary to know the absolute position of the edge of the document image concerned.

These problems will now be explained in specific detail. Figure 2 shows an example of a binarized target image 16, on a background 17. Parts of the document edge include smudged portions 18, shading 20, and colored patterns 22, and in addition there is some blurring 24 of the target image 16. When this is binarized by the conventional image binarization system shown in Figure 1 that uses a fixed threshold for the binarization, it produces the type of result shown in Figure 3, which shows that the smudged and shaded portions 18, 20, and the blurred portions 24, prevent the target image 16 from being accurately reproduced.

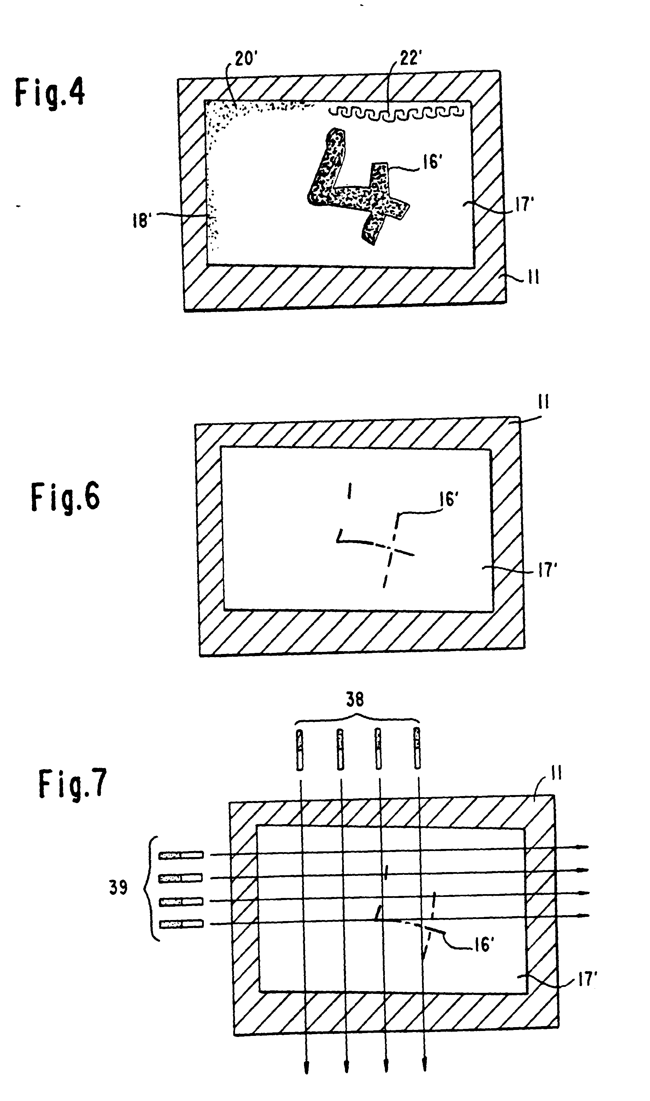

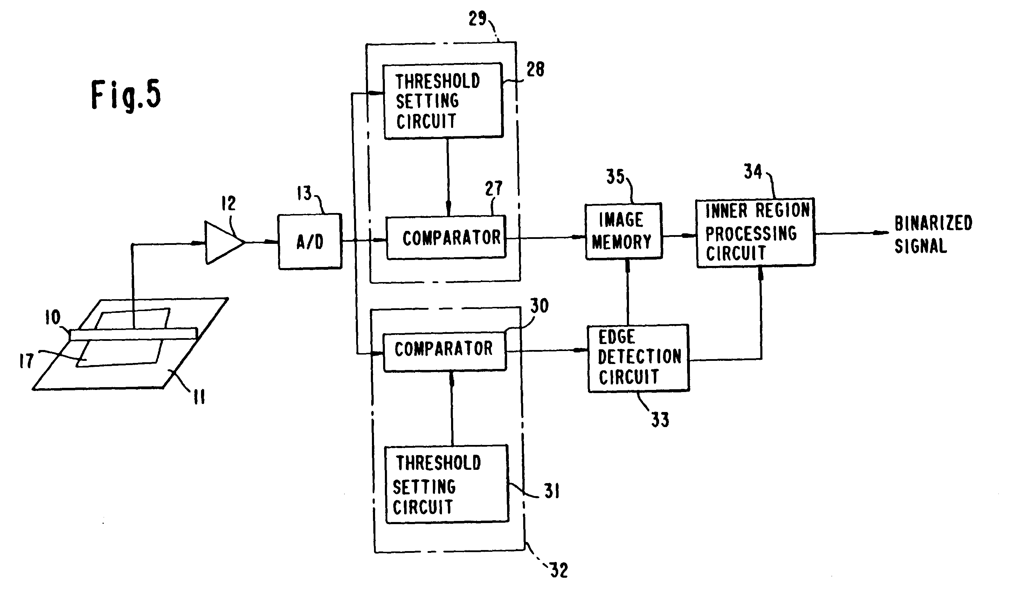

Figure 4 shows the result of using the conventional image binarization system of Figure 1 and a floating threshold setting corresponding to the average density level of pixels surrounding the image pixels of interest. While the image 16 contours can thereby be reproduced with better accuracy, a drawback is that smudged and shaded portions 18,20 and the like are also accurately reproduced, resulting in a document edge line that instead of being straight and clean is uneven or even missing in parts.

With respect to high-speed OCR and OMR systems, there is a demand for high-quality print on high-quality paper so as to preclude such binarization problems, and related JIS standards do exist. However, text written on ordinary paper, or the type of smudged text produced by a second carbon copy, or documents with colored portions or with text lacking sufficient contrast for clarity, cannot be read. Furthermore, a problem with speeding up operations by adding multiple image memory banks is that it increases the operational complexity of the system.

### SUMMARY OF THE INVENTION

An object of the present invention is therefore to provide an image binarization system that is able to accurately reproduce a target document image which has blurred contours or a low density level, and is also able to ignore smudges, patterns, non-uniform lighting effects and the like around the edge portions of the document while at the same time can easily and accurately detect the true edges of the document. This system makes it possible to read documents of normal printed quality without using special high-quality paper, and also enables high-speed, continuous image processing to be implemented with a minimum of memory capacity.

This object is attained by an image binarization system as claimed in claim 1. Such a system scans a document located at an arbitrary position within a two-dimensional image frame on a black background and converts the scanned, multilevel, digitized image signals to black and white binary signals, comprising: a first binarization section that binarizes halftone image regions in the inner portion of the document using a floating threshold value that is based on pixel density levels; a second binarization section that binarizes using a predetermined fixed threshold value; and detection means that uses the binarized signal output of the second binarization section to perform continuous detection of the top edge and either the right or the left edge of the document in order to define the inner portion of the document.

With the image binarization system thus configured, the binarization of the halftone image regions in the inner portion of the document is adaptively performed by a first binarization section in accordance with the intended purpose, while the detection of the edge portions of the document is Attention is further drawn to US-A-4,220.972 which discloses a system for automatic thresholding video data to detect objects of interest from both high and low contrast imagery. A real-time adaptive image interval extraction device extracts the edges of an object and simultaneously generates a bright signal for intensity larger than a given threshold. An edge filter determines the edge intensity magnitude associated between successive picture elements or pixels in the scan line of video data. An edge threshold is determined automatically from the adverage edge intensity of each scan line of data. When the data edge becomes greater than the edge threshold, a logical edge output is produced. In the same manner, the data is also passed through a bright filter which emphasizes data above a given background threshold. The background and threshold is updated on a line by line basis. This produces a logical signal when the intensity is above the automatically determined threshold.

In accordance with the present invention an image binarization system and an image binarization method are provided as claimed in claims 1 and 5, respectively. Preferred embodiments of the invention are disclosed in the dependent claims. handled by a second binarization section, and is facilitated by using a low, fixed threshold value specifically designed for edge extraction.

In a preferred embodiment, as defined in claim 2, the image binarization system is configured to provide binarized image data of images on scanned documents by optically scanning a document positioned in an image frame and providing scan line image intensity data for each scanned pixel of the frame, providing a fixed threshold intensity level, providing a floating threshold intensity level related to the average intensity level of a set of the image pixels adjacent to each scanned pixel, comparing the intensity data of scanned pixels to the fixed threshold intensity and providing first binary output data for each scanned pixel, comparing the intensity data of scanned pixels to the floating threshold intensity and providing second binary output data for each scanned pixel, detecting the edges of a scanned document in response to the first binary output data, and storing and processing the second binary output data for each scanned pixel of the image on the document in response to the detection of the document edges.

Further features of the invention, its nature and various advantages will become more apparent from the accompanying drawings and following detailed description of the invention.

### BRIEF DESCRIPTION OF THE DRAWINGS

Figure 1 shows the configuration of a conventional image binarization system;
Figure 2 shows an example of a multilevel, digitized image;
Figure 3 shows an image binarized using a conventional fixed-threshold binarization system;
Figure 4 shows an image binarized using a conventional adaptive-threshold binarization system;
Figure 5 shows the configuration of an image binarization system according to a first embodiment of the present invention;
Figure 6 shows an image binarized according to the present invention;
Figure 7 is an explanatory diagram to illustrate document edge detection in accordance with the present invention;
Figure 8 shows the configuration of an image binarization system according to another embodiment of the present invention;
Figure 9 is a histogram showing the signal levels of a scanned image; and
Figure 10 is an explanatory diagram to illustrate the changeover between the two binarized portions.

### DESCRIPTION OF THE PREFERRED EMBODIMENT

Figure 5 shows the arrangement of an image binarization system according to a first embodiment of the present invention. With reference to the drawing, image signals are read by an image acquisition means such as a scanner 10, amplified by an amplifier 12 and input to an A/D converter 13 which converts the analog signals to digital signals. For binarization, the digitized signals are then inputted to a comparator 27 and a threshold setting circuit 28.

The comparator 27 and a threshold setting circuit 28 used in the comparison operation form a first binarization section 29 which is used to binarize halftone image regions in the inner portion of the document in a way that is appropriate for the intended application of the binarized image. If text is the target, for example, a binarization method would be used that produces optimum results with respect to subsequent processing steps such as character extraction and recognition, for example. For this embodiment, a binarization method is used that is based on a floating threshold value that is constantly recalculated based on the density levels of the pixels surrounding each pixel of interest. This binarization method makes it possible to accurately reproduce the contours of blurred and low-contrast document object images. The image shown in Figure 4 was obtained by using this method to binarize the image 16 shown in Figure 2. The contours of the object image have been correctly reproduced. However, as has been explained, the position of the edge of the document has not been correctly acquired.

A comparator 30 and a threshold setting circuit 31 used in the comparison operation form a second binarization section 32 which is used for extracting document edges. The threshold setting circuit 31 is used to produce a fixed threshold setting. Scanning of non-document portions produces a stable black-level reading. This density level is ascertained beforehand and a fixed threshold value A is set at a level that is slightly less dense than the said density level.

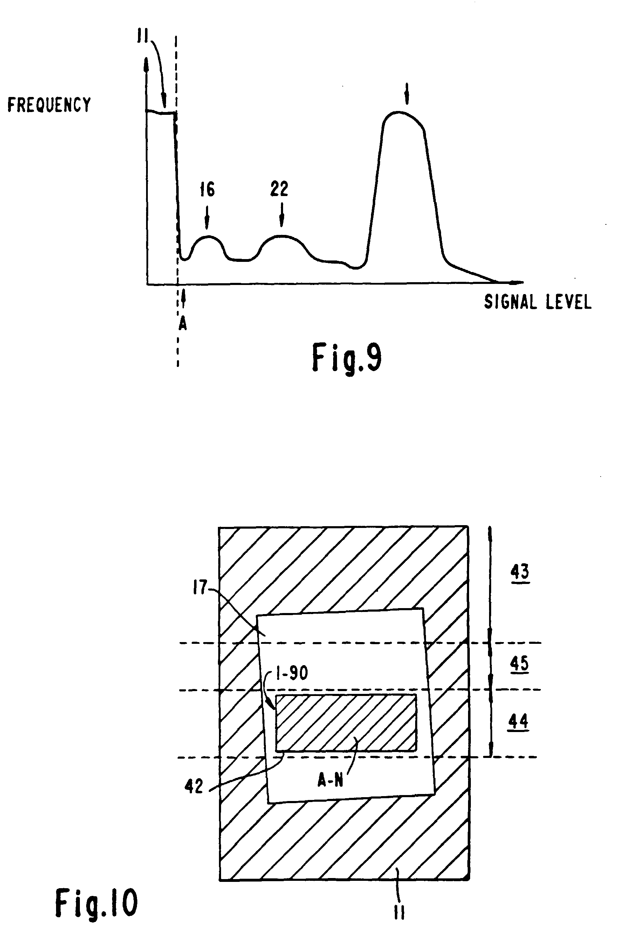

Figure 9 is a histogram showing the signal levels of a scanned image. As the scanned background signal level obtained from non-document portions is substantially constant, it is possible to set the fixed threshold value A so that it is slightly above the black level of the scanner, as shown in Figure 9. By thus using a low threshold setting, any smudged or shaded edge portions or low-contrast border design elements that have a lighter density level than the threshold value A will be binarized to white. This means that it is possible to obtain a binarized image with a clearly-defined boundary between document and non-document portions.

The signals binarized by the second binarization section 32 of Figure 5 are inputted to a document edge detection circuit 33. Data indicating the position of the document edge as detected by the edge detection circuit 33 is inputted to an inner region processing circuit 34 together with the image signals binarized by the first binarization section 29, and prescribed processing operations are performed to extract the target image 16.

When the document shown in Figure 2 is binarized by the image binarization system of this invention, the image shown in Figure 4 is produced by the first binarization section 29 and the image shown in Figure 6 is produced by the second binarization section 32. The binary image data produced by the second binarization section 32, using a low fixed-threshold value, is inputted to the edge detection circuit 33 which performs edge detection.

The edge detection method involves scanning an edge detection window in the direction of scanning being used at the time. Both the horizontal and vertical directions are shown in Figure 7. The positions at which there are matches between the half white, half black window patterns 38 or 39 and the binary image data provides detection of a set of edge positions within the image frame 11, in absolute terms. From a set of four points at which a document edge is detected, linear approximation is used to calculate the location of the upper left edge of the document.

If the document edge location information indicates that the document is skewed, for example, the inner region processing circuit 34 of Figure 5 calculates the amount of skew and compensates the image data accordingly. The circuit 34 also performs the processing to extract the prescribed region or regions of the document, using absolute positional data as measured from document corners. The image binarization system of this invention thus enables a target image 16' to be accurately extracted that has little blurring.

With the conventional type of system the entire image frame first has to be read into memory. While the image is being read out the document outline is sought and the required portion extracted and processed. This makes it difficult to continuously process multiple images input in rapid succession. Another drawback is that a large memory capacity is required to hold multiple image frames.

The fixed threshold image binarization system according to the present invention, on the other hand, provides real-time processing. Using the edge detection circuit 33 to detect the document edge makes it possible to extract and store just the required part of the document for immediate processing. In reference to Figure 10, this is done by detecting the upper edge of the document 17 in region 43 and constructing a linear approximation of the upper edge. This detection is repeated for the left (or right) edge, using the stream of incoming signals. Based on these two straight lines the position of the upper left (or right) corner is calculated, followed by the calculation of the address of the target image region 44 within the two-dimensional image frame 11.

The image frame vertical scanning address is continuously monitored and at the point at which the target address is reached, signal inputting is started into an image memory 35 (Figure 5), and stopped when address locations are exceeded. The vertical address monitoring is set to monitor the addresses of left/right edges detected every 32 scan lines.

Figure 10 shows the changeover between the two threshold circuits. This arrangement enables processing to be performed on a continuous basis and in addition minimizes the amount of memory required, simplifying the circuitry. For OCRs and other such systems in which continuous, rapid processing is required, this arrangement according to the present invention is highly effective.

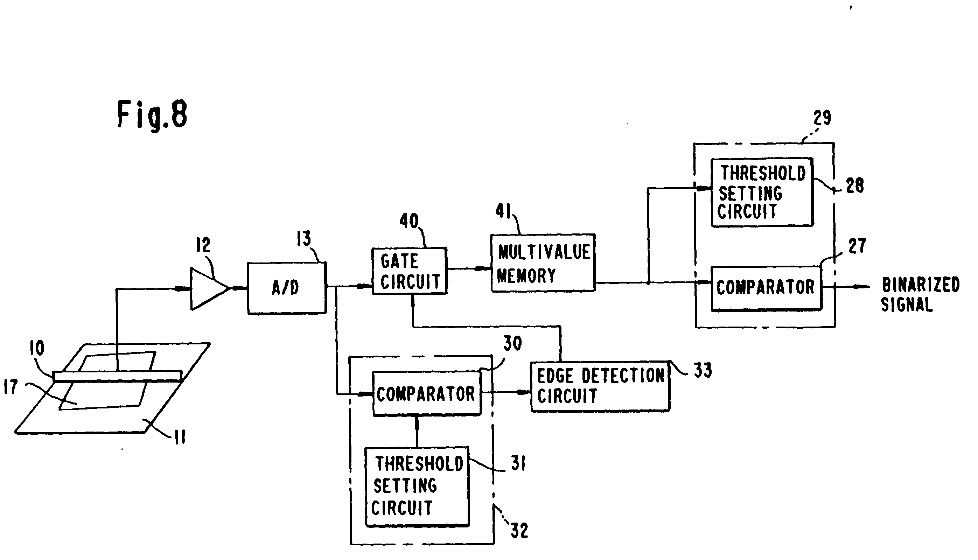

The Figure 5 embodiment of the invention has been described with reference to simultaneous binarization by the two binarization sections. For complex binarization operations that cannot be handled in real time, such as, for example, those using relatively wide-range error diffusion techniques, the arrangement shown in the embodiment of Figure 8 can be used. In this configuration, first the second binarization section 32 is used to binarize a designated region 43 in which the document edge is thought to exist. The edge detection circuit 33 is used to obtain the absolute location, within the image frame, of the document region 44 in which the target image 16 is located. Then just the surrounding region 42 is passed through a gate circuit 40 and stored in a multivalue memory 41. This is followed by binarization by the binarization section 29, thereby providing efficient processing of just the required portions of the document 17.

The embodiment of Figure 8 can be thus used to avoid the time consuming binarization of portions of a scanned document 17, e.g. portions 45 of Figure 10, that are known to not be of interest.

The embodiments of the invention have been described with reference to an edge detection window which is scanned from left to right, and the left edge is used as the initial location at which the positions of the window pattern and image pattern coincide. However, the right edge location may instead be used, by using a reversed black and white window pattern and storing in memory the final location at which the positions of the window pattern and image pattern coincide.

## Claims

1. An image binarization system that scans a document (17) located at an arbitrary position within a two-dimensional image frame (11) on a black background and converts scanned multilevel image signals to binary signals said document comprising an inner portion bounded by edges which define the physical boundaries of the document, said binarization system comprising:
second binarization means (29) for binarization of halftone image regions in said inner portion of the document using a floating threshold value that is based on pixel density levels;
first binarization means (32) for binarization of image signals corresponding to the area within said frame using a predetermined fixed threshold value; and
detection means (33) for using the binarized signal output from the first binarization means to perform continuous detection of the edges of the document and define the inner portion of the document.

2. The image binarization system of claim 1 comprising:
scanning means (10) for optically scanning said document and providing scan line image intensity data for each scanned pixel of the frame;
first threshold setting means for providing said fixed threshold intensity level;
second threshold setting means for providing said floating threshold intensity level related to the average intensity level of a set of the image pixels adjacent to each scanned pixel;
said first binarization means (29) comprising means (27) for comparing the intensity data of scanned pixels to the fixed threshold intensity and providing first binary output data for each scanned pixel;
said second binarization means (32) comprising means (30) for comparing the intensity data of scanned pixels to the floating threshold intensity and providing second binary output data for each scanned pixel;
said edge detection means (33) being responsive to the first binary output data for detecting the edges of said scanned document; and
means responsive to the detection of the document edges for storing and processing the second binary output data for each scanned pixel of the image on the document.

3. The system of Claim 2 wherein said edge detection means (33) further comprises:
means for defining an edge detection data window, comprising a pattern of binary pixel data values, representative of a document edge against the image frame;
means for comparing the first binary output data derived in a series of scan lines to the edge detection data window and identifying a set of identity scan positions indicative of the edge of the document against the image frame; and
means for extrapolating the top edge and side edge positions of the document in the image field and identifying any relative skew therebetween.

4. The system of Claim 3 further comprising:
means responsive to the detection of the top and side edge portions of the document for causing said second binarizing means to provide the second binary output data for a portion of the document within the top and side edge portions.

5. An image binarization method that scans a document located at an arbitrary position within a two-dimensional image frame on a black background and converts scanned multilevel image signals to binary signals , said document comprising an inner portion bounded by edges which define the physical boundaries of the document, said binarization method comprising the steps of:
binarizing the scanned image signals from halftone image regions in an inner portion of the document using a floating threshold value that is based on pixel density levels;
binarizing the scanned image signals corresponding to the area within said frame using a predetermined fixed threshold value; and
using the binarized signal output from the second binarizing step to perform continuous detection of the edges of the document and define the inner portion of the document.

6. The image binarization method of claim 5 comprising the steps of:
optically scanning
said
document positioned in said image frame and providing scan line image intensity data for each scanned pixel of the frame;
providing a fixed threshold intensity level;
providing a floating threshold intensity level related to the average intensity level of a set of the image pixels adjacent to each scanned pixel;
comparing the intensity data of scanned pixels to the fixed threshold intensity and providing first binary output data for each scanned pixel;
comparing the intensity data of scanned pixels to the floating threshold intensity and providing second binary output data for each scanned pixel;
detecting the edges of
said
scanned document in response to the first binary output data; and
storing and processing the second binary output data for each scanned pixel of the image on the document in response to the detection of the document edges.

7. The method of Claim 6 wherein said edge detection steps further comprises the steps of:
defining an edge detection data window, comprising a pattern of binary pixel data values, representative of a document edge against the image frame;
comparing the first binary output data derived in a series of scan lines to the edge detection data window and identifying a set of identity scan positions indicative of the edge of the document against the image frame; and
extrapolating the top edge and side edge positions of the document in the image field and identifying any relative skew therebetween.

8. The method of Claim 7 further comprising the steps of:
providing the second binary output data for a portion of the document within the top and side edge portions in response to the detection of the top and side edge portions of the document.

## Patentansprüche

1. Ein Bildbinarisierungssystem das ein in einer willkürlichen Position angeordnetes Dokument (17) innerhalb eines zweidimensionalen Bildfeldes oder Bildrahmens (11) auf einem schwarzen Hintergrund abtastet und die abgetasteten Multipegelbildsignale in binäre Signale umwandelt, wobei das Dokument einen durch Kanten begrenzten Innenteil aufweist die die körperlichen oder physikalischen Grenzen des Dokumentes definieren, wobei das Binarisiersystem folgendes aufweist:
zweite Binarisiermittel (29) zum Binarisieren von Halbtonbildzonen oder -regionen in dem erwähnten Innenteil des Dokumentes unter Verwendung eines schwimmenden Schwellenwertes der auf Pixeldichtepegeln basiert;
erste Binarisiermittel (32) zum Binarisieren von dem Gebiet innerhalb des Rahmens entsprechenden Bildsignalen unter Verwendung eines vorbestimmten festen Schwellenwertes; und Detektionsmittel (33) zur Verwendung der binarisierten Signalausgangsgröße von den ersten Binarisiermitteln zur Durchführung einer kontinuierlichen Detektion der Kanten des Dokuments und zur Definition des Innenteils des Dokuments.

2. Bildbinarisierungssystem nach Anspruch 1, wobei folgendes vorgesehen ist:
Abtastmittel (10) zum optischen Abtasten des Dokumentes und zum Vorsehen von Abtastzeilenbildintensitätsdaten für jedes abgetastete Pixel des Rahmens;
erste Schwelleneinstellmittel zum Vorsehen des festen Schwellenintensitätspegels;
zweite Schwelleneinstellmittel zum Vorsehen des schwimmenden Schwellenintensitätspegels in Beziehung stehend mit dem durchschnittlichen Intensitätspegel eines Satzes von Bildpixeln benachbart zu jedem abgetasteten Pixel;
wobei die ersten Binarisiermittel (29) Mittel (27) aufweisen zum Vergleichen der Intensitätsdaten der abgetasteten Pixel mit der festen Schwellenintensität und zum Vorsehen erster Binärausgangsdaten für jedes abgetastete Pixel;
wobei die zweiten Binarisiermittel (32) Mittel (30) aufweisen zum Vergleichen der Intensitätsdaten der abgetasteten Pixel mit der schwimmenden Schwellenintensität und zum Vorsehen zweiter binärer Ausgangsdaten für jedes abgetastete Pixel;
wobei die Kantendetektionsmittel (33) auf die ersten binären Ausgangsdaten ansprechen, um die Kanten des abgetasteten Dokumentes zu detektieren; und
Mittel die auf die Detektion der Dokumentkanten ansprechen, um die zweiten binären Ausgangsdaten für jedes abgetastete Pixel des Bildes auf dem Dokument zu speichern und zu verarbeiten.

3. System nach Anspruch 2, wobei die Kantendetektionsmittel (33) ferner folgendes aufweisen:
Mittel zur Definition eines Kantendetektionsdatenfensters, welches ein Muster aus Binärpixeldatenwerten aufweist, und zwar repräsentativ für eine Dokumentenkante gegenüber dem Bildrahmen;
Mittel zum Vergleichen der ersten binären Ausgangsdaten abgeleitet aus einer Reihe oder Serie von Abtastlinien zum Kantendetektionsdatenfenster und zum Indentifizieren eines Satzes von Indentitätsabtastpositionen die eine Anzeige bilden für die Kante des Dokumentes gegenüber dem Bildrahmen; und
Mittel zum Extrapolieren der Oberkanten- und Seitenkanten-Positionen des Dokumentes in dem Bildfeld und zum Indentifizieren jeder relativen Neigung dazwischen.

4. System nach Anspruch 3, wobei ferner folgendes vorgesehen ist:
auf die Detektion der oberen und Seitenkantenteile des Dokumentes ansprechende Mittel um zu bewirken, daß die zweiten Binarisiermittel die zweiten binären Ausgangsdaten für einen Teil des Dokumentes innerhalb der oberen und Seitenkantenteile vorsehen.

5. Bildbinarisierungsverfahren, das ein in einer willkürlichen Position angeordnetes Dokument innerhalb eines zweidimensionalen Bildbereichs oder Rahmens auf einem schwarzen Hintergrund abtastet und die abgetasteten Multipegel Bildsignale in binäre Signale umwandelt, wobei das Dokument einen Innenteil aufweist, der durch Kanten begrenzt ist, die die physikalischen oder körperlichen Grenzen des Dokumentes bilden, und wobei das Binarisierungsverfahren die folgenden Schritte aufweist:
Binarisieren der abgetasteten Bildsignale von den Halbtonregionen oder -zonen in einem Innenteil des Dokumentes unter Verwendung eines schwimmenden Schwellenwertes, der auf Pixeldichtepegeln basiert;
Binarisierung der abgetasteten Bildsignale entsprechend dem Gebiet innerhalb des Rahmens unter Verwendung eines vorbestimmten festen Schwellenwertes; und
Verwendung der binarisierten Signalausgangsgröße von dem zweiten Binarisierungsschritt zur Durchführung einer kontinuierlichen Detektion der Kanten des Dokumentes und zur Definition des Innenteils des Dokumentes.

6. Bildbinarisierungsverfahren nach Anspruch 5, wobei die folgenden Schritte vorgesehen sind:
optisches Abtasten des erwähnten Dokumentes positioniert in dem erwähnten Bildrahmen und Vorsehen von Abtastzeilenbildintensitätsdaten für jedes abgetastete Pixel des Rahmens;
Vorsehen eines festen Schwellenintensitätspegels;
Vorsehen eines schwimmenden Schwellenintensitätspegels in Beziehung stehend mit dem durchschnittlichen Intensitätspegel eines Satzes von Bildpixeln benachbart zu jedem abgetasteten Pixel;
Vergleichen der Intensitätsdaten der abgetasteten Pixel mit der festen Schwellenintensität und Vorsehen erster Binärausgangsdaten für jedes abgetastete Pixel;
Vergleichen der Intensitätsdaten der abgetasteten Pixel mit der schwimmenden Schwellenintensität und Vorsehen zweiter Binärausgangsdaten für jedes abgetastete Pixel;
Detektieren der Kanten des erwähnten abgetasteten Dokumentes ansprechend auf die ersten binären Ausgangsdaten; und
Speichern und Verarbeiten der zweiten binären Ausgangsdaten für jedes abgetastete Pixel des Bildes auf dem Dokument ansprechend auf die Detektion der Dokumentenkanten.

7. Verfahren nach Anspruch 6, wobei die Kantendetektionsschritte ferner folgende Schritte aufweisen:
Definition eines Kantendetektionsdatenfensters, welches ein Muster aus Binärpixeldatenwerten aufweist, und zwar repräsentativ für eine Dokumentenkante gegenüber dem Bildrahmen;
Vergleichen der ersten binären Ausgangssdaten abgeleitet in einer Reihe von Abtastlinien oder -zeilen mit dem Kantendetketionsdatenfenster und Identifizieren eines Satzes von Identitätsabtastpositionen die eine Anzeige bilden für die Kante des Dokumentes gegenüber dem Bildrahmen; und
Extrapolieren der Oberkanten- und Seitenkanten-Positionen des Dokumentes in dem Bildfeld und Identifizieren jedweder relativer Neigung dazwischen.

8. Verfahren nach Anspruch 7, wobei ferner die folgenden Schritte vorgesehen sind:
Vorsehen der zweiten binären Ausgangsdaten für einen Teil des Dokumentes innerhalb der oberen und Seitenkantenteile ansprechend auf die Detektion der oberen und Seitenkantenteile des Dokumentes.

## Revendications

1. Système de conversion d'image en binaire qui balaye un document (17) placé à une position arbitraire à l'intérieur d'un cadre-image bidimensionnel (11) sur un fond noir et convertit les signaux d'image à niveau multiple obtenus par balayage en signaux binaires, ledit document comprenant une partie intérieure délimitée par des bords qui définissent les limites physiques du document, ledit système de conversion en binaire comprenant :
un second moyen de conversion en binaire (29) pour convertir en binaire des régions d'image tramée dans ladite partie intérieure du document en utilisant une valeur de seuil flottant qui est basée sur des niveaux de densité des pixels ;
un premier moyen de conversion en binaire (32) pour convertir en binaire des signaux d'image correspondant à la zone à l'intérieur dudit cadre en utilisant une valeur de seuil fixe prédéterminée ; et
un moyen de détection (33) pour utiliser le signal converti en binaire issu du premier moyen de conversion en binaire afin d'effectuer une détection continue des bords du document et définir la partie intérieure du document.

2. Système de conversion d'image en binaire selon la revendication 1 comprenant :
un moyen de balayage (10) pour balayer optiquement ledit document et délivrer les données d'intensité d'image de ligne de balayage pour chaque pixel balayé du cadre ;
un premier moyen d'établissement de seuil pour délivrer ledit niveau d'intensité de seuil fixe ;
un second moyen d'établissement de seuil pour délivrer ledit niveau d'intensité de seuil flottant lié au niveau d'intensité moyen d'un ensemble de pixels d'image adjacents à chaque pixel balayé ;
ledit premier moyen de conversion en binaire (29) comprenant un moyen (27) pour comparer les données d'intensité des pixels balayés à l'intensité de seuil fixe et délivrer des premières données de sortie converties en binaire pour chaque pixel balayé ;
ledit second moyen de conversion en binaire (32) comprenant un moyen (30) pour comparer les données d'intensité des pixels balayés à l'intensité de seuil flottant et pour délivrer des secondes données de sortie converties en binaire pour chaque pixel balayé ;
ledit moyen de détection de bord (33) étant sensible aux premières données en sortie converties en binaire pour détecter les bords dudit document balayé ; et
un moyen sensible à la détection des bords du document pour mémoriser et traiter les secondes données de sortie converties en binaire pour chaque pixel balayé de l'image sur le document.

3. Système selon la revendication 2, dans lequel ledit moyen de détection de bord (33) comprend de plus :
un moyen pour définir une fenêtre de données de détection de bord comprenant un motif de valeur de données de pixel converties en binaire, représentatif d'un bord de document par rapport au cadre-image ;
un moyen pour comparer les premières données de sortie converties en binaire obtenues dans une série de lignes de balayage à la fenêtre de données de détection de bord et pour identifier un ensemble de positions de balayage identiques représentatives du bord du document par rapport au cadre-image ; et
un moyen pour extrapoler les positions de bord supérieur et de bord latéral du document dans la zone de l'image et identifier toute inclinaison relative entre ceux-ci.

4. Système selon la revendication 3 comprenant de plus :
un moyen répondant à la détection des parties de bord supérieure et latérale du document pour amener ledit second moyen de conversion en binaire à délivrer les secondes données de sortie converties en binaire pour une partie du document à l'intérieur des parties de bord supérieure et latérale.

5. Procédé de conversion d'image en binaire qui balaye un document placé à une position arbitraire à l'intérieur d'un cadre-image bidimensionnel sur un fond noir et convertit les signaux d'image à niveau multiple obtenus par balayage en signaux binaires, ledit document comprenant une partie intérieure délimitée par des bords qui définissent les limites physiques du document, ledit procédé de conversion en binaire comprenant les étapes consistant à :
convertir en binaire les signaux d'image obtenus par balayage à partir des régions d'image tramée dans une partie intérieure du document en utilisant une valeur de seuil flottant qui est basée sur les niveaux de densité des pixels ;
convertir en binaire les signaux d'image obtenus par balayage correspondant à la zone à l'intérieur dudit cadre en utilisant une valeur de seuil fixe prédéterminée ; et
utiliser le signal converti en binaire issu de la seconde étape de conversion en binaire afin d'effectuer une détection continue des bords du document et définir la partie intérieure du document.

6. Procédé de conversion d'image en binaire selon la revendication 5 comprenant les étapes consistant à :
balayer optiquement ledit document positionné dans ledit cadre-image et délivrer des données d'intensité d'image de ligne de balayage pour chaque pixel balayé du cadre ;
établir un niveau d'intensité de seuil fixe ;
établir un niveau d'intensité de seuil flottant lié au niveau d'intensité moyen d'un ensemble de pixels image adjacents à chaque pixel balayé ;
comparer les données d'intensité des pixels balayés à l'intensité du seuil fixe et délivrer des premières données de sortie converties en binaire pour chaque pixel balayé ;
comparer les données d'intensité des pixels balayés à l'intensité du seuil flottant et délivrer des secondes données de sortie converties en binaire pour chaque pixel balayé ;
détecter les bords dudit document balayé en réponse aux premières données en sortie converties en binaire ; et
mémoriser et traiter les secondes données de sortie converties en binaire pour chaque pixel balayé de l'image sur le document en réponse à la détection des bords du document.

7. Procédé selon la revendication 6, dans lequel lesdites étapes de détection de bord comprennent de plus les étapes consistant à :
définir une fenêtre de données de détection de bord, comprenant un motif de valeurs de données de pixel converties en binaire, représentatif d'un bord du document par rapport au cadre-image ;
comparer les premières données de sortie converties en binaire obtenues dans une série de lignes de balayage à la fenêtre de données de détection de bord et identifier un ensemble de positions de balayage représentatives du bord du document par rapport au cadre-image ; et
extrapoler les positions de bord supérieur et de bord latéral du document dans la zone de l'image et identifier toute inclinaison relative entre ceux-ci.

8. Procédé selon la revendication 7, comprenant de plus les étapes consistant à :
délivrer les secondes données de sortie converties en binaire pour une partie du document à l'intérieur des parties de bord supérieure et latérale en réponse à la détection des parties de bord supérieure et latérale du document.
